# EUROPÄISCHE PATENTSCHRIFT

(11) **EP 1 216 369 B1**
(45) Veröffentlichungstag und Bekanntmachung des Hinweises auf die Patenterteilung: **09.07.2003**
(21) Anmeldenummer: 00954616.9
(22) Anmeldetag: 09.08.2000
(51) Int. Cl.: F16H 61/00, F16H 61/12

(54) **NOTSTEUERUNG FÜR EIN KRAFTFAHRZEUG**
EMERGENCY CONTROL FOR A MOTOR VEHICLE
COMMANDE D'URGENCE POUR UN VEHICULE AUTOMOBILE

(30) Priorität: 14.09.1999 DE 19943939
(43) Veröffentlichungstag der Anmeldung: 26.06.2002
(73) Patentinhaber: Volkswagen Aktiengesellschaft, 38436 Wolfsburg (DE)
(72) Erfinder: JOHN, Michael, D-38179 Schwülper (DE); PREINE, Gerhard, D-38112 Braunschweig (DE); PAPE, Thomas, D-38547 Calberlah (DE)
(86) Internationale Anmeldenummer: EP0007745
(87) Internationale Veröffentlichungsnummer: WO01020199

(56) Entgegenhaltungen:
- EP-A- 0 498 210
- WO-A-96/02768
- DE-A- 19 546 293
- DE-A- 19 844 374
- US-A- 5 431 602

## Beschreibung

Die Erfindung geht aus von einer Notsteuerung für ein Kraftfahrzeug, wobei bei einem Ausfall der regulären Steuerung die Notsteuerung aktivierbar ist, mit einem stufenlos verstellbaren Getriebe, die eine Kupplungssteuerung, eine Anpreßsteuerung und eine Übersetzungssteuerung umfaßt, wobei die Kupplungssteuerung und die Übersetzungssteuerung eine Drehzahlabhängigkeit aufweisen.

Kraftfahrzeuge werden zur Erhöhung des Fahrkomforts zunehmend mit automatischen Getrieben und automatischen Kupplungen ausgestattet. Automatische Getriebe können als Stufengetriebe oder als stufenlos verstellbare Getriebe ausgebildet sein. Als stufenlos verstellbare Getriebe sind das Kegelscheibenumschlingungsgetriebe, das Kegelscheibenwälzgetriebe und das Toroidreibgetriebe bekannt. Automatische Kupplungen, die bei automatischen Getrieben meist nur als Anfahrelement Verwendung finden, sind in Form von Naß- oder Trockenkupplungen bekannt, wobei das Schließen oder Trennen der jeweiligen Kupplung aktiv oder passiv erfolgen kann. Beispielsweise erfolgt das Schließen im Falle einer hydraulischen Lamellenkupplung aktiv, nämlich durch eine Zuführung eines Druckmittels bzw. einer Erhöhung des Druckes des Druckmittels in der Kupplung.

Die Steuerung der Kraftübertragung in stufenlos verstellbaren Getrieben und zugeordneten Kupplungen, die im allgemeinen eine Kupplungssteuerung, eine Anpreßsteuerung und eine Übersetzungssteuerung umfaßt, erfolgt zunehmend über elektronische Rechner. So ist beispielsweise in vielen Kraftfahrzeugen mit stufenlos verstellbarem Getriebe die Änderung des Übersetzungsverhältnisses in Abhängigkeit relevanter Parameter, wie z.B. einer Fahrgeschwindigkeit, einer Motordrehzahl und einer Fahrpedalstellung, von einem Getrieberechner steuerbar. In der Regel erfolgt dann auch die Steuerung der zugeordneten Kupplung über diesen Getrieberechner.

Aus unterschiedlichsten Gründen kann es in rechnergestützten Steuerungen zu Störungen und infolgedessen zu einem Ausfall des betreffenden Rechners kommen, so auch bei einer rechnergestützten Steuerung eines stufenlos verstellbaren Getriebes und einer zugeordneten Kupplung. Um in einem solchen Fall eine Weiterfahrt zumindest in die nächste Werkstatt zu gewährleisten, ist bei dem Ausfall der regulären rechnergestützten Steuerung in der Regel eine Notsteuerung aktivierbar. Die Notsteuerung ist auf besondere Eigenschaften eines verwendeten Antriebsmotors abgestimmt. Beispielsweise ist zu berücksichtigen, daß ein Verbrennungsmotors, der in den meisten Kraftfahrzeugen als Antriebsmotor Verwendung findet, nur innerhalb eines begrenzten Drehzahlbereiches, d.h. zwischen einer Minimal- und einer Maximaldrehzahl, betreibbar ist und nur in diesem Bereich eine nutzbare Leistung abgeben kann.

Aus der WO 96/02768 A ist eine Hydrauliknotsteuerung für eine zwischen einem Verbrennungsmotor und einem Getriebe angeordnete Kupplung bekannt. Bei dieser Notsteuerung wird als maßgebliche Steuergröße eine Druckdifferenz verwendet, die durch ein Drosselventil in einer hydraulischen Arbeitsleitung erzeugbar ist, und die quadratisch mit der Drehzahl des eine Ölpumpe antreibenden Antriebsmotors ansteigt. Die Hydrauliknotsteuerung bewirkt, daß die Kupplung bei Unterschreiten einer unteren Steuerdrehzahl des Antriebsmotors schnell trennbar und bei Überschreiten einer oberen Steuerdrehzahl sanft schließbar ist.

In der gattungsbildenden EP 0 498 210 B1 wird eine Notsteuerung für ein stufenlos verstellbares Getriebe beschrieben, die hydraulisch ausgebildet und für ein Kegelscheibenumschlingungsgetriebe mit einer zugeordneten, aktiv hydraulisch schließbaren Kupplung vorgesehen ist. Das Kegelscheibenumschlingungsgetriebe weist ein Antriebsscheibenpaar und ein Abtriebsscheibenpaar auf, wobei jeweils ein gemeinsamer Aktuator für Anpressung und Übersetzungsverstellung vorgesehen ist. Bei einem Ausfall der regulären elektrohydraulischen Steuerung erfolgt eine Umschaltung auf die Notsteuerung über ein elektromagnetisch steuerbares und ein mit diesem in Verbindung stehendes hydraulisch steuerbares Umschaltventil. Die Notsteuerung weist zwei Steuerventile auf, durch die ein niedriger und ein hoher Systemdruck erzeugbar ist. Der niedrige Systemdruck wird zur Anpressung des Abtriebsscheibenpaares genutzt, während aus dem niedrigen und dem hohen Systemdruck über ein weiteres Steuerventil in Abhängigkeit eines drehzahlabhängigen Steuerdruckes ein gemeinsamer Wirkdruck zur Anpreßung und Übersetzungsverstellung des Antriebsscheinbenpaares erzeugbar ist. Die Kupplung ist bei aktivierter Notsteuerung unmittelbar mit dem drehzahlabhängigen Steuerdruck, der dann als Arbeitsdruck wirksam ist, beaufschlagbar. Durch die Ausbildung und Anordnung der Notsteuerung ergibt sich eine eingeschränkte Funktionalität, insbesondere was den nutzbaren Übersetzungsbereich des Getriebes und das Ansprechverhalten der Kupplung angeht.

Schließlich ist aus der DE 195 46 293 A1 eine Steuerung für ein stufenlos verstellbares Getriebe bekannt, wobei die Übersetzungssteuerung mit separaten Aktuatoren, nämlich Kolben-/Zylindereinheiten sowie die Anpreßsteuerung ebenfalls über separate Aktuatoren, nämlich auch über entsprechende Kolben-/Zylindereinheiten realisiert sind. Bei einem Ausfall der regulären Steuerung ist eine Notsteuerung nur auf komplexe Art und Weise realisierbar.

Allen vorgenannten Systemen ist grundsätzlich gemeinsam, daß bei einem Ausfall der regulären Steuerung, nur unter erheblichem Aufwand eine Notsteuerung realisierbar ist, die noch nicht optimal ausgebildet ist. Insbesondere sind die Anpreß- und Übersetzungssteuerung jeweils nicht immer unabhängig voneinander ausgebildet, bzw. ist dann eine Notsteuerung realisierbar (vgl. EP 0 498 210 A1), wo ein jeweils niedriger und ein jeweils hoher Systemdruck erzeugbar ist und der niedrige Systemdruck zur Anpressung genutzt wird und aus dem niedrigen und dem hohen Systemdruck ein gemeinsamer Wirkdruck zur Anpressung und Übersetzungsverstellung erzeugbar ist. Diese Art der Notsteuerung ist einerseits sehr aufwendig, andererseits noch nicht optimal, da die einzelnen Steuerungen voneinander abhängig sind.

Der vorliegenden Erfindung liegt das Problem zugrunde, die gattungsbildende Notsteuerung derart weiterzubilden, daß mit einem einfachen Aufbau eine verbesserte Funktionalität erreicht wird.

Das Problem wird durch die Merkmale des Anspruches 1 gelöst.

Vorteilhafte Ausgestaltungen ergeben sich aus den Unteransprüchen.

Die Notsteuerung für ein Kraftfahrzeug, das mit einem stufenlos verstellbaren Getriebe versehen ist, weist eine Kupplungssteuerung, eine Anpreßsteuerung und eine Übersetzungssteuerung auf. Die Kupplungssteuerung und die Übersetzungssteuerung sind drehzahlabhängig, die Anpresssteuerung drehmomentabhängig ausgebildet. Eine dem Getriebe zugeordnete Kupplung ist daher in Abhängigkeit einer Drehzahl eines zum Antrieb des Kraftfahrzeuges vorgesehenen Antriebsmotors trennbar und schließbar, z.B. um ein unbeabsichtigtes Abwürgen des Antriebsmotors bei Unterschreitung einer bestimmten Drehzahl zu vermeiden und ein Anfahren bei Überschreitung einer bestimmten Drehzahl zu ermöglichen. Ein Übersetzungsverhältnis des Getriebes ist in Abhängigkeit der Drehzahl veränderbar, d.h. im wesentlichen mit steigender Drehzahl vergrößerbar und mit sinkender Drehzahl verkleinerbar, so daß eine Fahrgeschwindigkeit des Kraftfahrzeuges durch eine Veränderung der Drehzahl des Antriebsmotors steuerbar ist, die von einem Fahrer über ein Fahrpedal beeinflussbar ist. Da in den bekannten stufenlos verstellbaren Getrieben ein Drehmoment über Reibkräfte übertragen wird, ist es vorteilhaft, wenn die zur Erzeugung der Reibkräfte erforderlichen Anpresskräfte durch die Anpresssteuerung im wesentlichen proportional zu dem momentan von dem Antriebsmotor erzeugten und somit zu übertragenden Drehmoment veränderbar sind. Dadurch wird eine Unteranpressung vermieden, so daß eine sichere Übertragung des Drehmomentes gewährleistet ist. Die Anpresssteuerung und die Übersetzungssteuerung sind unabhängig voneinander ausgebildet und angeordnet, wodurch eine gegenseitige Beeinflussung bzw. Störung dieser beiden Teilsteuerungen (Anpreß- und Übersetzungssteuerung) weitgehend vermeidbar ist. Für die Notsteuerung ergibt sich eine einfache Struktur und es ist eine Verwendung einfacher Steuerungselemente möglich. Insgesamt ist eine vollständige Funktionalität des Getriebes gegeben, insbesondere ist auch eine vollständige Nutzung des konstruktiv vorgesehenen Übersetzungsbereiches möglich.

Die Anpreßsteuerung und die Übersetzungssteuerung kann jeweils mit separaten Aktuatoren des Getriebes in Wirkverbindung stehen. Wie durch die separate Ausbildung der beiden Teilsteuerungen werden dadurch einfache Wirkzusammenhänge erreicht und eine gegenseitige Beeinflussung weitgehend ausgeschlossen.

Als stufenlos verstellbares Getriebe kann ein Kegelscheibenumschlingungsgetriebe mit einem Antriebs- und einem Abtriebsscheibenpaar Verwendung finden, wobei die Anpreßsteuerung und die Übersetzungssteuerung an den Scheibenpaaren jeweils mit separaten Aktuatoren in Wirkverbindung stehen können. Das im Prinzip bekannte Kegelscheibenumschlingungsgetriebe weist ein Antriebsscheibenpaar und ein Abtriebsscheibenpaar auf, die über ein zwischen den Scheibenpaaren umlaufendes Zugmittel in Verbindung stehen. Durch Anpreßaktuatoren sind die Scheibenpaare jeweils derart axial gegen das Zugmittel zusammendrückbar, daß ein Drehmoment über Reibkräfte zwischen den Scheibenpaaren und dem Zugmittel übertragbar ist. Durch separate Übersetzungsaktuatoren ist unabhängig von den Anpreßaktuatoren ein axialer Abstand der Scheibenpaare einstellbar, so daß das Zugmittel radial nach außen drückbar oder in Verbindung mit einer im Zugmittel wirksamen Zugkraft radial nach innen ziehbar ist. Dabei erfolgt ein Ausgleich zwischen den Scheibenpaaren durch eine endliche Länge des Zugmittels. Eine Verstellung des Übersetzungsverhältnisses ergibt sich aus dem Verhältnis von an dem Antriebsscheibenpaar und dem Abtriebsscheibenpaar wirksamen Durchmessern, auf denen das Zugmittel abwälzbar ist. Ein kleiner Durchmesser am Antriebsscheibenpaar und ein großer Durchmesser am Abtriebsscheibenpaar ergibt ein kleines Übersetzungsverhältnis, das z.B. als Anfahrübersetzung nutzbar ist. Im umgekehrten Fall ergibt sich ein großes Übersetzungsverhältnis, das für eine Schnellfahrt geeignet ist. Durch die Verwendung separater Aktuatoren für Anpressung und Übersetzungsverstellung, insbesondere an dem Abtriebsscheibenpaar, wird ein schnelles Ansprechverhalten der Teilsteuerungen erreicht.

Zur Steuerung der Kupplung und des Übersetzungsverhältnisses des Getriebes kann eine Einrichtung zur Erzeugung eines drehzahlabhängigen Steuersignales vorgesehen sein. Um zu vermeiden, daß die Drehzahl des Antriebsmotors unmittelbar, d.h. mechanisch, auf die Aktuatoren oder auf diesen zugeordnete Steuerelemente der Notsteuerung einwirkt, ist die Umwandlung der Drehzahl in ein drehzahlabhängiges Steuersignal zweckmäßig. Je nach Ausbildung der Notsteuerung kann das drehzahlabhängige Steuersignal beispielsweise als hydraulischer Druck oder als pneumatischer Druck erzeugbar sein.

Es können ein Kupplungsaktuator und Übersetzungsaktuatoren vorgesehen sein, die derart ausgebildet und angeordnet sind, daß sie unmittelbar oder über zugeordnete Steuerelemente mittels des drehzahlabhängigen Steuersignales steuerbar sind. Bei einer unmittelbaren Steuerung wirkt das drehzahlabhängige Steuersignal ohne ein zwischengeschaltetes Steuerelement, das z.B. bei einer hydraulischen Steuerung ein Steuerventil sein kann, auf den entsprechenden Aktuator ein. Dadurch ergibt sich ein vereinfachter Aufbau der Steuerung. In vielen Fällen reicht jedoch eine in den Steuersignalen vorhandene Energie nicht aus, um ausreichend große Stellkräfte zu erzeugen. In solchen Fällen ist es zweckmäßig, die Zuführung der Energie zu dem betreffenden Aktuator und dessen Beeinflussung durch das drehzahlabhängige Steuersignal getrennt auszubilden.

Da bestimmte Funktionen, wie z.B. die Anpreßsteuerung, vorteilhaft drehmomentabhängig ausgebildet sind, kann eine Einrichtung zur Erzeugung eines drehmomentabhängigen Steuersignales vorgesehen sein. Dadurch steht dann der Wert des momentan von dem Antriebsmotor erzeugten Drehmomentes als leicht nutzbares hydraulisches, pneumatisches oder elektrisches Steuersignal zur Verfügung.

Es können Anpreßaktuatoren vorgesehen sein, die derart ausgebildet und angeordnet sind, daß sie unmittelbar oder über zugeordnete Steuerelemente mittels des drehmomentabhängigen Steuersignales steuerbar sind. Durch eine drehmomentabhängige Steuerung der Anpressung ist eine Unteranpressung, die Schlupf und erhöhten Verschleiß zur Folge hätte, vermeidbar. Somit ist eine hohe Funktionssicherheit gegeben.

Des weiteren kann eine Schalteinrichtung zur Umschaltung von einer Normal- auf die Notsteuerung vorgesehen sein. Durch die Schalteinrichtung ist eine gegenseitige Beeinflussung der Normalsteuerung und der Notsteuerung vermeidbar. Bei intakter Normalsteuerung und bei aktivierter Notsteuerung haben ggf. noch vorhandene Steuersignale der jeweils anderen Steuerung keine Auswirkung auf die vorhandenen Aktuatoren, so daß Funktionsstörungen weitgehend ausgeschlossen sind.

Die Notsteuerung kann als vollhydraulische Steuerung ausgebildet sein, d.h. sowohl die Erzeugung der durch die Aktuatoren erzeugbaren Stellkräfte als auch deren Beeinflussung durch die Notsteuerung erfolgt hydraulisch. Durch hydraulische Einrichtungen sind große Stellkräfte bei relativ kleinem Bauvolumen erzeugbar. Hydraulische Steuerungen weisen im allgemeinen einen einfachen Aufbau und hohe Betriebssicherheit auf.

Die Schalteinrichtung zur Umschaltung von der Normal- auf die Notsteuerung kann ein elektromagnetisch steuerbares Umschaltventil und / oder ein hydraulisch steuerbares Umschaltventil aufweisen. Durch die Verwendung von Umschaltventilen ist eine eindeutige Umschaltung und somit eine hohe Betriebssicherheit gegeben, da sich Umschaltventile konstruktiv bedingt jeweils nur in einer von zwei Schaltpositionen befinden können. Die Verwendung eines elektromagnetischen Umschaltventils ist vorteilhaft, wenn es im Pannenfall stromlos wird und dann automatisch in die Schaltposition für die Aktivierung der Notsteuerung umschaltet. Da hydraulische Arbeitsdrücke meist relativ hoch sind, ist für deren Umschaltung ein nachgeschaltetes hydraulisches Umschaltventil zweckmäßig, um eine Rückwirkung auf das elektromagnetische Umschaltventil zu vermeiden.

Die Einrichtung zur Erzeugung eines drehzahlabhängigen Steuersignales ist als Drosseleinrichtung ausgebildet sein. Die Drosseleinrichtung ist derart in einer Arbeitsleitung angeordnet sein, daß das Steuersignal als drehzahlabhängige Steuerdruckdifferenz oder als drehzahlabhängiger Absolutsteuerdruck erzeugbar ist. Als Drosseleinrichtung kommt beispielsweise ein spezielles Drosselventil in Frage, das u.U. zur Justierung oder Anpassung an das jeweilige Getriebe und die verwendete Kupplung verstellbar ausgebildet sein kann. Als Drosseleinrichtung können jedoch auch ohnehin vorhandene Drosselventile und / oder Verbraucher genutzt werden. Bei Verwendung einer von dem Antriebsmotor des Kraftfahrzeuges angetriebenen hydrostatischen Ölpumpe verhält sich der Volumenstrom des Druckmittels im wesentlichen proportional zur Drehzahl des Antriebsmotors. Durch die Anordnung der Drosseleinrichtung ist eingangsseitig durch einen Aufstau ein hoher drehzahlabhängiger Druck und ausgangsseitig durch einen in der Drosseleinrichtung bewirkten Druckverlust ein niedriger drehzahlabhängiger Druck erzeugbar. Als nutzbarer drehzahlabhängiger Steuerdruck kommen beide Einzeldrücke als auch eine durch diese gebildete Druckdifferenz in Frage.

Die Einrichtung zur Erzeugung eines drehmomentabhängigen Steuersignales kann als Drehmomentfühlerventil ausgebildet sein, wobei das Drehmomentfühlerventil dann derart in einer Arbeitsleitung angeordnet sein kann, daß ein in der Arbeitsleitung wirksamer Arbeitsdruck drehmomentabhängig steuerbar ist. Durch das Drehmomentfühlerventil, auf das das momentan von dem Antriebsmotor erzeugte Drehmoment als Steuergröße einwirkt, steigt der Arbeitsdruck in der Arbeitsleitung proportional zu diesem Drehmoment an bzw. sinkt mit diesem ab.

Das Drehmomentfühlerventil kann in einer Hauptarbeitsleitung angeordnet sein und kann eine Mindestdruckbegrenzung aufweisen. Durch diese Anordnung des Drehmomentfühlerventiles ist eine drehzahlabhängige Steuerung des Druckes in der Hauptarbeitsleitung und in allen dieser nachgeschalteten Leitungen gegeben. Damit wird in einer Art Grobsteuerung ein allgemeines Druckniveau der Notsteuerung festgelegt, das mit dem Drehmoment des Antriebsmotors ansteigt. Eine weitere Feinsteuerung, die z.B. drehzahlabhängig ausgebildet sein kann, kann dann über nachgeschaltete Steuerventile erfolgen.

Die Anpreßaktuatoren können unmittelbar über Arbeitsleitungen mit dem Drehmomentfühlerventil in Verbindung stehen. Da die Anpressung ohnehin vorteilhaft drehmomentabhängig erfolgt, ist bei der zuvor beschriebenen Anordnung des Drehmomentfühlerventils und bei Verwendung separater Aktuatoren für Anpressung und Übersetzungsverstellung eine weitere Steuerung der Anpreßaktuatoren über zwischengeschaltete Steuerventile nicht erforderlich. Die entsprechenden Steuerventile können also eingespart werden.

Es kann ein Steuerelement zur Kupplungssteuerung vorgesehen sein. Dieses Steuerelemet kann als Kupplungssteuerventil ausgebildet sein und eine proportionale Steuercharakteristik aufweisen. Die Kupplungssteuerung erfolgt drehzahlabhängig. Hierzu ist die Verwendung eines Kupplungssteuerventils mit proportionaler Steuercharakteristik vorteilhaft. Hierdurch steigt der im Kupplungsaktuator wirksame Druck des Druckmittels mit steigender Drehzahl des Antriebsmotors an bzw. sinkt mit sinkender Drehzahl ab. Durch eine entsprechende Abstimmung des Kupplungsaktuators und des Kupplungssteuerventiles ist erreichbar, daß die Kupplung bei Unterschreiten einer unteren Steuerdrehzahl des Antriebsmotors schnell trennbar und bei Überschreiten einer oberen Steuerdrehzahl sanft schließbar ist

Ebenso kann ein Steuerelement zur Übersetzungssteuerung des Antriebsscheibenpaares vorgesehen sein. Dieses Steuerelement kann als antriebsseitiges Übersetzungssteuerventil ausgebildet sein und eine proportionale Steuercharakteristik aufweisen. Auch die Übersetzungssteuerung erfolgt drehzahlabhängig. Dabei bewirkt das antriebsseitige Übersetzungssteuerventil, daß die Antriebsscheiben mit steigender Drehzahl zusammengedrückt werden, was zu einem größeren Übersetzungsverhältnis führt. Die Verstellung des Übersetzungsverhältnisses erfolgt also ausgehend von einer Leerlaufdrehzahl des Antriebsmotors mit steigender Drehzahl von einer Anfahrübersetzung in Richtung einer Schnellfahrübersetzung.

Das Kupplungssteuerventil und / oder das antriebsseitige Übersetzungssteuerventil können eine Mindestdruckbegrenzung aufweisen. Dadurch ist ein schnelles Ansprechverhalten des Kupplungsaktuators und / oder des antriebsseitigen Übersetzungsaktuators erreichbar, da eine Verzögerung durch eine Vorbefüllung der Aktuatoren entfällt.

Es kann ein gemeinsames Steuerventil zur Kupplungssteuerung und zur Übersetzungssteuerung des Antriebsscheibenpaares vorgesehen sein. Da der Kupplungsaktuator und der antriebsseitige Übersetzungsaktuator mit gleicher Steuercharakteristik steuerbar sind, können beide Aktuatoren über ein einziges Steuerventil gesteuert werden. Eines der ansonsten erforderlichen zwei Steuerventile kann somit eingespart werden.

Es kann ein Steuerelement zur Übersetzungssteuerung des Abtriebsscheibenpaares vorgesehen sein. Dieses Steuerelemet kann als abtriebsseitiges Übersetzungssteuerventil ausgebildet sein und eine inverse Steuercharakteristik aufweisen. Analog zur Übersetzungssteuerung des Antriebsscheibenpaares bewirkt das abtriebsseitige Übersetzungssteuerventil, daß die Abtriebsscheiben mit steigender Drehzahl durch das Zugmittel auseinandergedrückt werden können, was zu einem größeren Übersetzungsverhältnis führt. Diese Funktion ist in einfacher Weise durch ein Steuerventil mit inverser Steuercharakteristik erreichbar.

Das abtriebsseitige Übersetzungssteuerventil kann eine Maximaldruckbegrenzung aufweisen. Dadurch wird ein zu langes Verharren des Abtriebsscheibenpaares in einem vollkommen zusammengedrückten Zustand verhindert und das Ansprechverhalten der Übersetzungssteuerung, speziell nach einem Anfahrvorgang, verbessert.

Weitere Merkmale und vorteilhafte Ausgestaltungen der Erfindung ergeben sich aus der Beschreibung der nachstehend aufgeführten Ausführungsbeispiele.

Es zeigen:
- Figur 1: eine hydraulische Notsteuerung in schematisierter Form und
- Figur 2: eine weiterentwickelte Ausführung der in der Figur 1 dargestellten Notsteuerung.

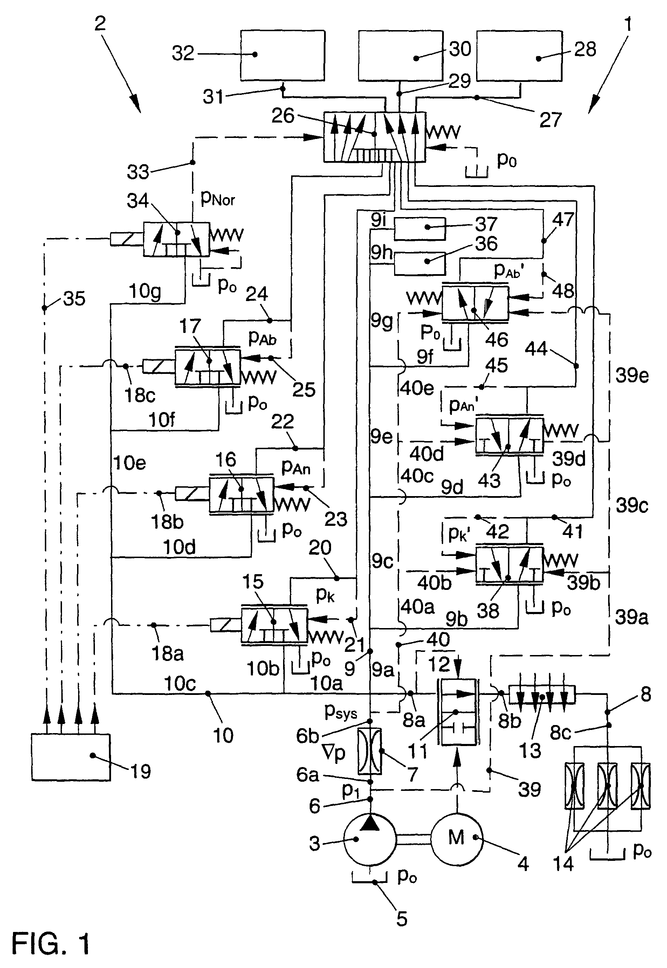

Die Figur 1 zeigt eine Ausführungsform der erfindungsgemäßen Notsteuerung 1, die als hydraulische Notsteuerung ausgebildet ist. Da viele Komponenten gleichermaßen Bestandteil sowohl der Notsteuerung 1 als auch einer elektrohydraulischen Normalsteuerung 2 sind, ist zum besseren Verständnis auch die Normalsteuerung 2 dargestellt. Hydraulische Arbeitsleitungen sind als ununterbrochene Linien, hydraulische Steuerleitungen als unterbrochene Linien, und elektrische Steuerleitungen als strichpunktierte Linien dargestellt. Umschaltventile sind mit schematisierten Schaltfunktionen, die in Quadrate eingezeichnet sind, versehen, wobei die zugeordneten Arbeitsleitungen jeweils an diejenige Schaltfunktion herangeführt sind, die im Ruhezustand, d.h. ohne Einwirkung äußerer Kräfte, jedoch unter Einwirkung einer Rückstellkraft einer jeweils zugeordneten Feder, vorliegt und im folgenden Ruhestellung genannt wird. Steuerventile, die im Gegensatz zu den Umschaltventilen in Abhängigkeit von wirksamen Steuerkräften auch Zwischenstellungen zwischen der Ruhestellung und einer dieser gegenüberliegenden Extremstellung einnehmen können, sind durch eine Einfassung mit zwei parallelen Linien kenntlich gemacht.

Die Notsteuerung 1 und die Normalsteuerung 2 sind für eine Steuerung einer aktiv schließbaren Kupplung und eines als Kegelscheibenumschlingungsgetriebe ausgebildeten stufenlos verstellbaren Getriebes vorgesehen. Dabei wird davon ausgegangen, daß das Getriebe ein Antriebsscheibenpaar und ein Abtriebsscheibenpaar aufweist, denen jeweils separate Aktuatoren zur Anpressung und zur Übersetzungsverstellung zugeordnet sind. Das Antriebsscheibenpaar und das Abtriebsscheibenpaar stehen über ein zwischen diesen umlaufendes Zugmittel in Verbindung. Durch eine axiale Anpressung der Scheibenpaare ist ein Drehmoment über Reibungskräfte von dem jeweiligen Scheibenpaar auf das Zugmittel und umgekehrt übertragbar. Durch eine jeweils gegenläufige Verstellung eines axialen Abstandes der Scheibenpaare ist ein jeweiliger wirksamer Durchmesser, auf dem das Zugmittel abwälzbar ist, veränderbar, was eine Verstellung eines Übersetzungsverhältnisses des Getriebes bedeutet.

Beiden Steuerungen gemeinsam ist eine hydrostatische Ölpumpe 3, die mit einem Antriebsmotor 4 verbunden ist und von diesem antreibbar ist. Eingangsseitig steht die Ölpumpe 3 mit einem Öltank 5 in Verbindung, um aus diesem ein Druckmittel, z.B. Hydrauliköl, das dort einen Ruhedruck p₀ aufweist, in einen Abschnitt 6a einer Hauptarbeitsleitung 6 mit einem Druck p₁ zu fördern. In der Hauptarbeitsleitung 6 ist zwischen dem Abschnitt 6a und einem Abschnitt 6b eine Drosseleinrichtung 7, die z.B. als Drosselventil ausgebildet sein kann, angeordnet. Durch diese Drosseleinrichtung ist ein Druckabfall erzeugbar, der einem durch die Ölpumpe 3 geförderten Volumenstrom weitgehend proportional ist. Es ergibt sich daher eine Druckdifferenz □p, die sich rechnerisch aus der Differenz aus dem Druck p₁ und einem sich im Abschnitt 6b der Hauptarbeitsleitung 6 einstellenden niedrigeren Systemdruck p_{Sys} ergibt. Nach dem Abschnitt 6b verzweigt die Hauptarbeitsleitung 6 in drei Arbeitsleitungen, nämlich in eine Kühlarbeitsleitung 8, eine Arbeitsleitung 9 und eine Arbeitsleitung 10. In der Kühlarbeitsleitung 8 befindet sich nach einem Abschnitt 8a ein Drehmomentfühlerventil 11, das mit dem Antriebsmotor 4 in Verbindung steht und derart ausgebildet und angeordnet ist, daß der in den Arbeitsleitungen 8, 9, 10 wirksame Systemdruck p_{Sys} in Abhängigkeit eines momentan von dem Antriebsmotor 4 erzeugten Drehmomentes steuerbar ist, indem ein Durchfluß des Druckmittels durch das Drehmomentfühlerventil 11 mit zunehmendem Drehmoment stärker gedrosselt wird. Das Drehmomentfühlerventil 11 weist eine Eingangsdruckregelung 12 auf, durch die eine Mindestdruckbegrenzung gegeben ist, mit deren Hilfe zur Verbesserung des Ansprechverhaltens beider Steuerungen 1, 2 ein Absinken des Systemdruckes p_{Sys} unter einen kritischen Wert verhinderbar ist. Ausgangsseitig des Drehmomentfühlerventiles 11 ist nach einem Abschnitt 8b der Kühlarbeitsleitung 8 ein Kühler 13 angeordnet, durch den das Druckmittel kühlbar ist, bevor es über einen Abschnitt 8c der Kühlarbeitsleitung 8 über mehrere Drosselstellen 14, unter denen man sich Verbraucher, wie z.B. Kühlblenden, vorstellen kann, in den Öltank 5 zurückgeführt wird. Der Öltank 5 ist zwar in der Realität meist einteilig ausgebildet, jedoch hier in der Figur 1 zur besseren Übersichtlichkeit jeweils in der Nähe des entsprechenden Bauteiles separat dargestellt.

Die Arbeitsleitung 10 steht über Abschnitte 10a und 10b mit einem elektrohydraulischen Kupplungssteuerventil 15, über Abschnitte 10a, 10c und 10d mit einem elektrohydraulischen antriebsseitigen Übersetzungssteuerventil 16, und über Abschnitte 10a, 10c, 10e und 10f mit einem abtriebsseitigen Übersetzungssteuerventil 17 in Verbindung. Die elektrohydraulischen Steuerventile 15, 16 und 17 sind der Normalsteuerung 2 zugeordnet und weitgehend baugleich; sie stehen jeweils über elektrische Steuerleitungen 18a, 18b, und 18c mit einem Steuergerät 19 in Verbindung. Ausgangsseitig weisen diese Steuerventile 15, 16 und 17 jeweils eine Arbeitsleitung 20, 22, 24 mit zugeordneter Ausgangsdruckregelung 21, 23, 25 auf. In der Ruhestellung der Steuerventile 15, 16, 17 sind die ausgangsseitigen Arbeitsleitungen 20, 22, 24 jeweils drucklos auf den Öltank 5 geschaltet. Der Durchfluß des Druckmittels durch die elektromagnetisch steuerbaren Steuerventile 15, 16, 17 ist durch das Steuergerät 19, in dem relevante Parameter, wie z.B. eine Fahrgeschwindigkeit, eine Drehzahl des Antriebsmotors 4 und eine Fahrpedalstellung, verarbeitbar sind, jeweils unabhängig voneinander über entsprechende Steuerleitungen 18a, 18b, 18c derart drosselbar, daß sich in der Arbeitsleitung 20 ein Kupplungswirkdruck p_{K}, in der Arbeitsleitung 22 ein antriebsseitiger Übersetzungswirkdruck p_{An}, und in der Arbeitsleitung 24 ein abtriebsseitiger Übersetzungswirkdruck p_{Ab} einstellt. Diese Wirkdrücke p_{K}, p_{An}, p_{Ab} sind über ein hydraulisches Umschaltventil 26 und jeweils zugeordnete Arbeitsleitungen 27, 29, 31 einem Kupplungsaktuator 28, einem antriebsseitigen Übersetzungsaktuator 30 und einem abtriebsseitigen Übersetzungsaktuator 32 zuführbar, wodurch diese Aktuatoren 28, 30, 32 zum Schließen oder Trennen der zugeordneten Kupplung bzw. zur Veränderung des Übersetzungsverhältnisses des zugeordneten Getriebes veranlaßbar sind. Das Umschaltventil 26 ist über eine hydraulische Steuerleitung 33 mittels eines elektrohydraulischen Umschaltventiles 34 steuerbar. Das Umschaltventil 34 steht über eine elektrische Steuerleitung 35 mit dem Steuergerät 19 in Verbindung und befindet sich im Normalfall, d.h. bei aktivierter Normalsteuerung 2, in einer betätigten Schaltstellung, in der der Durchfluß des unter dem Systemdruck p_{Sys} stehenden Druckmittels über die Abschnitte 10a, 10c, 10e und einen Abschnitt 10g der Arbeitsleitung 10 und über die Steuerleitung 33 zu dem Umschaltventil 26 geöffnet ist, so daß der Systemdruck p_{Sys} dann dort als Steuerdruck p_{Nor} wirksam ist und sich das Umschaltventil 26 dann ebenfalls in einer betätigten Schaltstellung befindet, in der die Wirkdrücke p_{K}, p_{An}, p_{Ab} der Normalsteuerung 2 zu den Aktuatoren 28, 30, 32 durchgeschaltet sind.

Bei Auftreten einer Störung in dem Steuergerät 19 wird die Steuerleitung 35 stromlos, was zur Umschaltung des Umschaltventiles 34 in seine in der Figur 1 dargestellte Ruhestellung führt, in der der Zufluß des Druckmittels über den Abschnitt 10g der Arbeitsleitung 10 gesperrt und die Steuerleitung 33 drucklos auf den Öltank 5 geschaltet ist. Infolgedessen erfolgt dann auch die Umschaltung des Umschaltventiles 26 in seine in der Figur 1 dargestellte Ruhestellung, in der der Zufluß des Druckmittels mit den Wirkdrücken p_{K}, p_{An}, p_{Ab} der Normalsteuerung 2 über die Arbeitsleitungen 27, 29, 31 gesperrt ist.

Die Arbeitsleitung 9 steht über Abschnitte 9a, 9c, 9e, 9 g und 9h unmittelbar mit einem antriebsseitigen Anpreßaktuator 36 und über die Abschnitte 9a, 9c, 9e, 9g und einen Abschnitt 9i unmittelbar mit einem abtriebsseitigen Anpreßaktuator 37 in Verbindung. Demzufolge sind die Anpreßaktuatoren 36, 37, auf die bzw. in denen unmittelbar der über das Drehmomentfühlerventil 11 steuerbare Systemdruck p_{Sys} wirksam ist, in Abhängigkeit von der Drehzahl des Antriebsmotors 4 steuerbar, und zwar unabhängig davon, ob die Normalsteuerung 2 oder die Notsteuerung 1 aktiviert ist.

Über den Abschnitt 9a und einen Abschnitt 9b der Arbeitsleitung 9 ist der Systemdruck p_{Sys} einem vollhydraulischen Kupplungssteuerventil 38 der Notsteuerung 1 zuführbar. Auf das Kupplungssteuerventil 38 ist die Druckdifferenz □p als Steuergröße wirksam, wobei der im Abschnitt 6a der Hauptarbeitsleitung 6 vor der Drosseleinrichtung 7 vorliegende höhere Druck p₁ über Abschnitte 39a und 39b einer Steuerleitung 39 und der im Abschnitt 6b der Hauptarbeitsleitung 6 nach der Drosseleinrichtung 7 vorliegende niedrigere Systemdruck p_{Sys} über Abschnitte 40a und 40b einer Steuerleitung 40 an das Kupplungssteuerventil 38 herangeführt sind. Das Kupplungssteuerventil 38 ist in seiner Ruhestellung geöffnet, d.h. der über den Abschnitt 9a und einen Abschnitt 9b der Arbeitsleitung 9 herangeführte Systemdruck p_{Sys} wird theoretisch ungedrosselt über eine ausgangsseitig angeordnete Arbeitsleitung 41 zu dem hydraulischen Umschaltventil 26 weitergeleitet. Praktisch jedoch bewirkt eine vorgesehene Ausgangsdruckregelung 42 im Zusammenwirken mit der Steuerdruckdifferenz □p einerseits eine Drosselung des Durchflusses des Druckmittels, so daß sich ausgangsseitig ein Kupplungswirkdruck p_{K}' einstellt, und andererseits als Mindestdruckbegrenzung, wodurch ein besseres Ansprechverhalten des Kupplungsaktuators 28 gegeben ist. Das Kupplungssteuerventil weist eine proportionale Steuerungscharakteristik auf, d.h. der Kupplungswirkdruck p_{K}' steigt mit zunehmender Steuerdruckdifferenz □p und somit mit steigender Drehzahl des Antriebsmotors 4 an.

Über die Abschnitte 9a, 9c und einen Abschnitt 9d der Arbeitsleitung 9 ist der Systemdruck p_{Sys} einem vollhydraulischen antriebsseitigen Übersetzungssteuerventil 43 der Notsteuerung 1 zuführbar. Auf dieses Übersetzungssteuerventil 43 ist ebenfalls die Druckdifferenz □p als Steuergröße wirksam, wobei der Druck p₁ über den Abschnitt 39a und Abschnitte 39c und 39d der Steuerleitung 39 und der Systemdruck p_{Sys} über den Abschnitt 40a und Abschnitte 40c und 40d der Steuerleitung 40 an das Übersetzungssteuerventil 43 herangeführt sind, welches weitgehend identisch wie das Kupplungssteuerventil 38 ausgebildet ist und eine proportionale Steuerungscharakteristik aufweist. Ein durch das Übersetzungssteuerventil 43 erzeugbarer antriebsseitiger Übersetzungssteuerdruck p_{An}' ist ausgangsseitig über eine Arbeitsleitung 44 an das Umschaltventil 26 herangeführt. Eine vorhandene Ausgangsdruckregelung 45 ist auch hier u.a. als Mindestdruckbegrenzung wirksam.

Über die Abschnitte 9a, 9c, 9e und einen Abschnitt 9f der Arbeitsleitung 9 ist der Systemdruck p_{Sys} einem vollhydraulischen abtriebsseitigen Übersetzungssteuerventil 46 der Notsteuerung 1 zuführbar. Auf dieses Übersetzungssteuerventil 46 ist wiederum die Druckdifferenz □p als Steuergröße wirksam, wobei der Druck p₁ über die Abschnitte 39a, 39c und Abschnitte 39e und 39f der Steuerleitung 39 und der Systemdruck p_{Sys} über die Abschnitte 40a, 40c und Abschnitte 40e und 40f der Steuerleitung 40 an das Übersetzungssteuerventil 46 herangeführt sind, welches eine inverse Steuerungscharakteristik aufweist, d.h. ein durch das Übersetzungssteuerventil erzeugbarer abtriebsseitiger Übersetzungssteuerdruck p_{Ab}', der über eine ausgangsseitig angeordnete Arbeitsleitung 47 an das Umschaltventil 26 herangeführt ist, sinkt mit zunehmender Steuerdruckdifferenz □p und somit mit steigender Drehzahl des Antriebsmotors 4 ab. Eine vorgesehene Ausgangsdruckregelung 48 ist hier als Maximaldruckbegrenzung wirksam, wodurch das Ansprechverhalten einer Übersetzungsverstellung der Notsteuerung 1, speziell nach einem Anfahrvorgang, verbessert wird.

Bei einem Ausfall der Normalsteuerung 2 befindet sich das hydraulische Umschaltventil 26, wie schon zuvor erläutert wurde, in seiner Ruhestellung. Somit ist die Notsteuerung 1 dann durch ein Durchschalten der Arbeitsleitungen 41, 44, 47 zu den Aktuatoren 28, 30, 32 aktiviert, wobei in diesem Fall die Arbeitsdrücke p_{K}', p_{An}', und p_{Ab}' wirksam sind.

Aufgrund einer weitgehenden Trennung von Kupplungssteuerung, Anpreßsteuerung und Übersetzungssteuerung ergibt sich eine übersichtliche Struktur der Notsteuerung 1 mit jeweils einfachen Wirkzusammenhängen. Daher ist mit verhältnismäßig geringem Aufwand, z.B. mit den relativ einfachen und preisgünstigen Steuerventilen 38, 43, 46, eine gute Funktionalität der Notsteuerung 1 erreichbar.

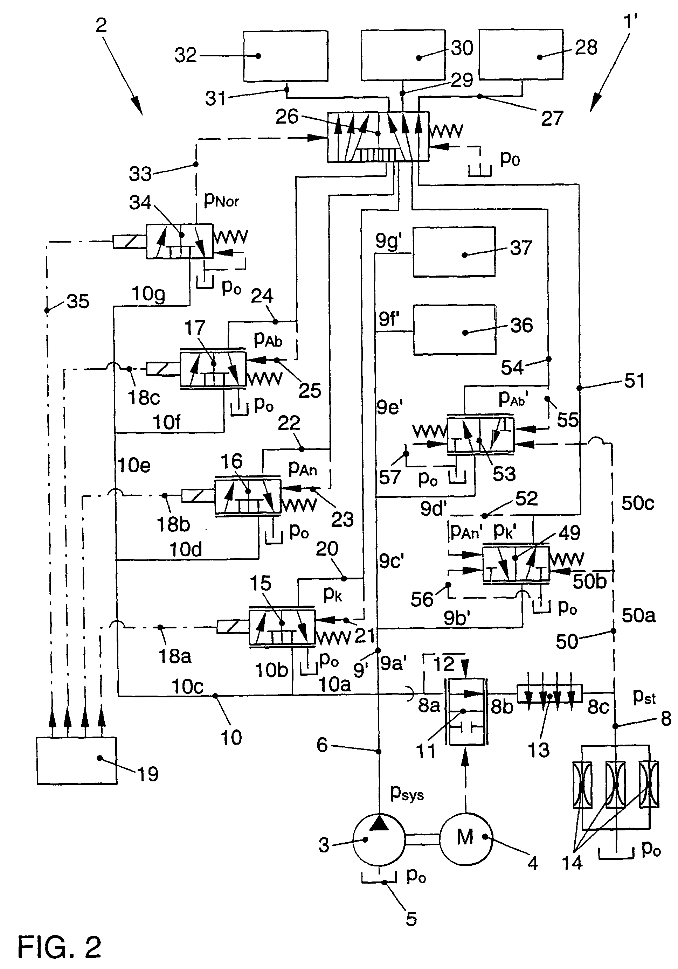

Die Figur 2 zeigt eine hydraulische Notsteuerung 1', die gegenüber der in Fig. 1 dargestellten Notsteuerung 1 anders ausgebildet ist. Da Ausbildung und Anordnung der weiterentwickelten Notsteuerung 1' in weiten Bereichen mit der zuvor beschriebenen Notsteuerung 1 übereinstimmen, werden nachfolgend im wesentlichen die Unterschiede näher erläutert. Im übrigen wird auf die Beschreibung zu Fig. 1 verwiesen.

Aufgrund weitgehend gleicher Wirkzusammenhänge der Steuerung des Kupplungsaktuators 28 und der Steuerung des antriebsseitigen Übersetzungsaktuators 30 ist die Funktion des in der Fig. 1 dargestellten Kupplungssteuerventiles 38 und des antriebsseitigen Übersetzungssteuerventiles 43 hier in einem einzigen Kupplungs- und Übersetzungssteuerventil 49 zusammengefaßt, wodurch ein Steuerventil eingespart ist. Das Steuerventil 49 weist eine proportionale Steuercharakteristik auf und steht über Abschnitte 9a' und 9b' der Arbeitsleitung 9' mit dem unter dem Systemdruck p_{Sys} stehenden Druckmittel in Verbindung. Als Steuergröße ist hier keine Druckdifferenz sondern ein Absolutsteuerdruck p_{St} wirksam, der über Abschnitte 50a und 50b einer Steuerleitung 50 im Abschnitt 8c der Kühlarbeitsleitung 8 zwischen dem Kühler 13 und den vorhandenen Drosselstellen 14 abgenommen wird. Der Steuerdruck p_{St} ist aufgrund eines durchflußabhängigen Aufstaus vor den Drosselstellen 14 drehzahlabhängig, d.h. mit steigender Drehzahl des Antriebsmotors 4 ergibt sich aufgrund einer höheren Durchflußgeschwindigkeit des Druckmittels ein höherer Druck p_{St} in dem Abschnitt 8c der Kühlarbeitsleitung 8. Ausgangsseitig wird der durch das Steuerventil 49 erzeugbare Kupplungswirkdruck p_{K}' und der in diesem Fall identische antriebsseitige Übersetzungswirkdruck p_{An}' über eine gemeinsame Arbeitsleitung 51 dem Umschaltventil zugeführt. Eine an dem Steuerventil 49 vorgesehene Ausgangsdruckregelung 52 ist als Mindestdruckbegrenzung wirksam.

Über den Abschnitt 9a' und Abschnitte 9c' und 9d' der Arbeitsleitung 9 wird der Systemdruck p_{Sys} auch zu einem abtriebsseitigen Übersetzungssteuerventil 53 geleitet. Dieses Steuerventil 53 ist ebenfalls über den drehzahlabhängigen Steuerdruck p_{St} steuerbar, der über den Abschnitt 50a und einen Abschnitt 50c der Steuerleitung 50 herangeführt ist. Das Steuerventil 53 weist eine inverse Steuerungscharakteristik auf, d.h. durch eine steigende Drehzahl des Antriebsmotors ist ein Absinken des abtriebsseitigen Übersetzungswirkdruckes p_{Ab}' erreichbar, der über eine ausgangsseitige Arbeitsleitung 54 zu dem Umschaltventil 26 geführt ist. Eine ebenfalls vorhandene Ausgangsdruckregelung 55 ist in diesem Fall als Maximaldruckbegrenzung wirksam. Über die Abschnitte 9a' und 9c' und Abschnitte 9e' und 9f' bzw 9g' der Arbeitsleitung 9' ist der über das Drehmomentfühlerventil 11 drehmomentabhängig steuerbare Systemdruck p_{Sys} ebenfalls in dem antriebsseitigen und dem abtriebsseitigen Anpreßaktuator 36, 37 wirksam.

An den Steuerventilen 49 und 53 ist der Steuerdruck p_{St} jeweils entgegen dem Ruhedruck p₀ wirksam, der durch eine Steuerleitung 56 bzw. 57 herangeführt ist. Dadurch bedingt sind Konstruktion und Fertigung der Steuerventile 49, 53 wesentlich einfacher und damit kostengünstiger. Zur Erzeugung des Systemdruckes p_{Sys} ist eine geringere Antriebsleistung für die Ölpumpe 3 erforderlich, was zu einer Wirkungsgradverbesserung der Notsteuerung 1' gegenüber der Notsteuerung 1 führt.

## Patentansprüche

1. Notsteuerung für ein Kraftfahrzeug, wobei bei einem Ausfall der regulären Steuerung die Notsteuerung aktivierbar ist, mit einem stufenlos verstellbaren Getriebe, die eine Kupplungssteuerung, eine Anspreßsteuerung und eine Übersetzungssteuerung umfaßt, wobei die Kupplungssteuerung und die Übersetzungssteuerung eine Drehzahlabhängigkeit aufweisen, **dadurch gekennzeichnet, daß** die Anpreßsteuerung und die Übersetzungssteuerung unabhängig voneinander ausgebildet und angeordnet sind, daß die Anpreßsteuerung eine Drehmomentabhängigkeit aufweist, daß zur Erzeugung eines drehzahlabhängigen Steuersignales eine Drosseleinrichtung (7) vorgesehen und derart in einer Arbeitsleitung (6, 8) angeordnet ist, daß das Steuersignal als drehzahlabhängige Steuerdruckdifferenz (Δp) oder als drehzahlabhängiger Absolutsteuerdruck (pₛₜ) erzeugbar ist.

2. Notsteuerung nach Anspruch 1, **dadurch gekennzeichnet, daß** die Anpreßsteuerung und die Übersetzungssteuerung jeweils mit separaten Aktuatoren des Getriebes in Wirkverbindung stehen.

3. Notsteuerung nach Anspruch 2, **dadurch gekennzeichnet, daß** als stufenlos verstellbares Getriebe ein Kegelscheibenumschlingungsgetriebe mit einem Antriebs- und einem Abtriebsscheibenpaar Verwendung findet, und daß die Anpreßsteuerung und die Übersetzungssteuerung an den Scheibenpaaren jeweils mit separaten Aktuatoren (28, 30, 32, 36, 37) in Wirkverbindung stehen.

4. Notsteuerung nach einem der Ansprüche 1 bis 3, **dadurch gekennzeichnet, daß** eine Einrichtung zur Erzeugung eines drehzahlabhängigen Steuersignales vorgesehen ist.

5. Notsteuerung nach Anspruch 4, **dadurch gekennzeichnet, daß** ein Kupplungsaktuator (28) und Übersetzungsaktuatoren (30, 32) vorgesehen sind, die derart ausgebildet und angeordnet sind, daß sie unmittelbar oder über zugeordnete Steuerelemente mittels des drehzahlabhängigen Steuersignales steuerbar sind.

6. Notsteuerung nach einem der Ansprüche 1 bis 5, **dadurch gekennzeichnet, daß** eine Einrichtung zur Erzeugung eines drehmomentabhängigen Steuersignales vorgesehen ist.

7. Notsteuerung nach Anspruch 6, **dadurch gekennzeichnet, daß** Anpreßaktuatoren (36, 37) vorgesehen sind, die derart ausgebildet und angeordnet sind, daß sie unmittelbar oder über zugeordnete Steuerelemente mittels des drehmomentabhängigen Steuersignales steuerbar sind.

8. Notsteuerung nach einem der Ansprüche 1 bis 7, **dadurch gekennzeichnet, daß** eine Schalteinrichtung von einer Normal- auf die Notsteuerung vorgesehen ist.

9. Notsteuerung nach einem der Ansprüche 1 bis 8, **dadurch gekennzeichnet, daß** eine vollhydraulische Notsteuerung (1, 1') vorgesehen ist.

10. Notsteuerung nach Anspruch 9, **dadurch gekennzeichnet, daß** die Schalteinrichtung ein elektromagnetisch steuerbares Umschaltventil (34) und / oder ein hydraulisch steuerbares Umschaltventil (26) aufweist.

11. Notsteuerung nach einem der Ansprüche 9 oder 10, **dadurch gekennzeichnet, daß** die Einrichtung zur Erzeugung eines drehmomentabhängigen Steuersignales als Drehmomentfühlerventil (11) ausgebildet ist, und daß das Drehmomentfühlerventil derart in einer Arbeitsleitung (8) angeordnet ist, daß ein in der Arbeitsleitung wirksamer Arbeitsdruck (p_{Sys}) drehmomentabhängig steuerbar ist.

12. Notsteuerung nach Anspruch 11, **dadurch gekennzeichnet, daß** das Drehmomentfühlerventil (11) in einer Hauptarbeitsleitung (6) angeordnet ist, und daß das Drehmomentfühlerventil (11) eine Mindestdruckbegrenzung aufweist.

13. Notsteuerung nach Anspruch 11 oder 12, **dadurch gekennzeichnet, daß** die Anpreßaktuatoren (36, 37) unmittelbar über Arbeitsleitungen (8, 9) mit dem Drehmomentfühlerventil (11) in Verbindung stehen.

14. Notsteuerung nach einem der Ansprüche 9 bis 13, **dadurch gekennzeichnet, daß** ein Steuerelement zur Kupplungssteuerung vorgesehen ist, daß das Steuerelement als Kupplungssteuerventil (38) ausgebildet ist, und daß das Kupplungssteuerventil (38) eine proportionale Steuercharakteristik aufweist.

15. Notsteuerung nach einem der Ansprüche 9 bis 14, **dadurch gekennzeichnet, daß** ein Steuerelement zur Übersetzungssteuerung des Antriebsscheibenpaares vorgesehen ist, daß das Steuerelement als antriebsseitiges Übersetzungssteuerventil (43) ausgebildet ist, und daß das antriebsseitige Übersetzungssteuerventil (43) eine proportionale Steuercharakteristik aufweist.

16. Notsteuerung nach Anspruch 14 oder 15, **dadurch gekennzeichnet, daß** das Kupplungssteuerventil (38) und / oder das antriebsseitige Übersetzungsventil (43) eine Mindestdruckbegrenzung aufweist.

17. Notsteuerung nach einem der Ansprüche 14 bis 16, **dadurch gekennzeichnet, daß** ein gemeinsames Steuerventil zur Kupplungssteuerung und zur Übersetzungssteuerung des Antriebsscheibenpaares vorgesehen ist.

18. Notsteuerung nach einem der Ansprüche 9 bis 17, **dadurch gekennzeichnet, daß** ein Steuerelement zur Übersetzungssteuerung des Abtriebsscheibenpaares vorgesehen ist, daß das Steuerelement als abtriebsseitiges Übersetzungssteuerventil (46) ausgebildet ist, und daß das abtriebsseitige Übersetzungssteuerventil (46) eine inverse Steuercharakteristik aufweist.

19. Notsteuerung nach Anspruch 18, **dadurch gekennzeichnet, daß** das abtriebsseitige Übersetzungssteuerventil (46) eine Maximaldruckbegrenzung aufweist.

## Claims

1. Emergency controller for a motor vehicle, it being possible to activate the emergency controller when the ordinary controller fails, having an infinitely adjustable gearbox which comprises a clutch controller, a contract pressure controller and a transmission ratio controller, the clutch controller and the transmission ratio controller having a rotational speed dependence, **characterized in that** the contact pressure controller and the transmission ratio controller are embodied and arranged independently of one another, **in that** the contact pressure controller has a torque dependence, **in that**, in order to generate a rotational-speed-dependent control signal, a throttle device (7) is provided and is arranged in a working line (6, 8) in such a way that the control signal can be generated as a rotational-speed-dependent control pressure difference (Δp) or as a rotational-speed-dependent absolute control pressure (pₛₜ).

2. Emergency controller according to Claim 1, **characterized in that** the contact pressure controller and the transmission ratio controller are each operatively connected to separate actuators of the gearbox.

3. Emergency controller according to Claim 2, **characterized in that** a wrap-around conical disc gearbox with a pair of drive discs and a pair of output discs is used as the infinitely adjustable gearbox, and **in that** the contact pressure controller and the transmission ratio controller on the pairs of discs are each operatively connected to separate actuators (28, 30, 32, 36, 37)

4. Emergency controller according to one of Claims 1 to 3, **characterized in that** a device for generating a rotational-speed-dependent control signal is provided.

5. Emergency controller according to Claim 4, **characterized in that** a clutch actuator (28) and transmission ratio actuators (30, 32) are provided which are embodied and arranged in such a way that they can be controlled by means of the rotational-speed-dependent control signal, directly or via assigned control elements.

6. Emergency controller according to one of Claims 1 to 5, **characterized in that** a device for generating a torque-dependent control signal is provided.

7. Emergency controller according to Claim 6, **characterized in that** contact pressure actuators (36, 37) are provided which are embodied and arranged in such a way that they can be controlled by means of the torque-dependent control signal, directly or via assigned control elements.

8. Emergency controller according to one of Claims 1 to 7, **characterized in that** a switching device is provided for switching from a normal controller to the emergency controller.

9. Emergency controller according to one of Claims 1 to 8, **characterized in that** a fully hydraulic emergency controller (1, 1') is provided.

10. Emergency controller according to Claim 9, **characterized in that** the switching device comprises an electromagnetically controllable switch-over valve (34) and/or a hydraulically controllable switch-over valve (26).

11. Emergency controller according to one of Claims 9 or 10, **characterized in that** the device for generating a torque-dependent control signal is embodied as a torque sensor valve (11) and **in that** the torque sensor valve is arranged in a working line (8) in such a way that a working pressure (p_{Sys}) which is active in the working line can be controlled as a function of the torque.

12. Emergency controller according to Claim 11, **characterized in that** the torque sensor valve (11) is arranged in a main working line (6), and **in that** the torque sensor valve (11) has a minimum pressure limitation.

13. Emergency controller according to Claim 11 or 12, **characterized in that** the contact pressure actuators (36, 37) are connected directly to the torque sensor valve (11) via working lines (8, 9).

14. Emergency controller according to one of Claims 9 to 13, **characterized in that** a control element is provided for controlling the clutch, **in that** the control element is embodied as a clutch control valve (38), and **in that** the clutch control valve (38) has a proportional control characteristic.

15. Emergency controller according to one of Claims 9 to 14, **characterized in that** a control element for controlling the transmission ratio of the pair of drive discs is provided, **in that** the control element is embodied as a drive-side transmission ratio control valve (43), and **in that** the drive-side transmission ratio control valve (43) has a proportional control characteristic.

16. Emergency controller according to Claim 14 or 15, **characterized in that** the clutch control valve (38) and/or the drive-side transmission ratio valve (43) has a minimum pressure limitation.

17. Emergency controller according to one of Claims 14 to 16, **characterized in that** a common control valve is provided for controlling the clutch and for controlling the transmission ratio of the pair of drive discs.

18. Emergency controller according to one of Claims 9 to 17, **characterized in that** a control element is provided for controlling the transmission ratio of the pair of output discs, **in that** the control element is embodied as an output-side transmission ratio control valve (46), and **in that** the output-side transmission ratio control valve (46) has an inverse control characteristic.

19. Emergency controller according to Claim 18, **characterized in that** the output-side transmission ratio control valve (46) has a maximum pressure limitation.

## Revendications

1. Commande d'urgence pour un véhicule automobile, la commande d'urgence pouvant être activée en cas de panne de la commande normale, comprenant un mécanisme de transmission à réglage graduel qui englobe une commande d'embrayage, une commande de mise en pression et une commande de démultiplication, la commande d'embrayage et la commande de démultiplication présentant une dépendance à la vitesse de rotation, **caractérisée en ce que** la commande de mise en pression et la commande de démultiplication sont configurées et disposées indépendamment l'une de l'autre, que la commande de mise en pression présente une dépendance au couple, qu'un dispositif d'étranglement (7) est prévu pour générer un signal de commande dépendant de la vitesse de rotation et disposé de telle manière dans une conduite de service (6, 8) que le signal de commande peut être généré sous la forme d'une différence de pression de commande dépendante de la vitesse de rotation (Δp) ou d'une pression de commande absolue dépendante de la vitesse de rotation (pₛₜ).

2. Commande d'urgence selon la revendication 1, **caractérisée en ce que** la commande de mise en pression et la commande de démultiplication se trouvent en liaison active avec à chaque fois des actionneurs séparés du mécanisme de transmission.

3. Commande d'urgence selon la revendication 2, **caractérisée en ce que** le mécanisme de transmission à réglage graduel utilisé est un mécanisme de transmission à contact par pignons coniques comprenant une paire de pignons menants et une paire de pignons de sortie, et que la commande de mise en pression et la commande de démultiplication se trouvent en liaison active avec à chaque fois des actionneurs séparés (28, 30, 32, 36, 37) au niveau des paires de pignons.

4. Commande d'urgence selon l'une des revendications 1 à 3, **caractérisée en ce qu'**il est prévu un dispositif pour générer un signal de commande dépendant de la vitesse de rotation.

5. Commande d'urgence selon la revendication 4, **caractérisée en ce que** sont prévus un actionneur d'embrayage (28) et des actionneurs de démultiplication (30, 32) qui sont configurés et disposés de manière à pouvoir être commandés directement ou par le biais d'éléments de commande associés au moyen du signal de commande dépendant de la vitesse de rotation.

6. Commande d'urgence selon l'une des revendications 1 à 5, **caractérisée en ce qu'**il est prévu un dispositif pour générer un signal de commande dépendant du couple.

7. Commande d'urgence selon la revendication 6, **caractérisée en ce que** sont prévus des actionneurs de mise en pression (36, 37) qui sont configurés et disposés de manière à pouvoir être commandés directement ou par le biais d'éléments de commande associés au moyen du signal de commande dépendant du couple.

8. Commande d'urgence selon l'une des revendications 1 à 7, **caractérisée en ce qu'**il est prévu un dispositif de commutation pour passer de la commande normale à la commande d'urgence.

9. Commande d'urgence selon l'une des revendications 1 à 8, **caractérisée en ce qu'**il est prévu une commande d'urgence entièrement hydraulique (1, 1').

10. Commande d'urgence selon la revendication 9, **caractérisée en ce que** le dispositif de commutation présente une vanne d'inversion à commande électromagnétique (34) et/ou une vanne d'inversion à commande hydraulique (26).

11. Commande d'urgence selon l'une des revendications 9 ou 10, **caractérisée en ce que** le dispositif destiné à générer un signal de commande dépendant du couple est réalisé sous la forme d'une vanne de détection de couple (11) et que la vanne de détection de couple est disposée de telle manière dans la conduite de service (8) qu'une pression de service (p_{Sys}) appliquée dans la conduite de service peut être commandée en fonction du couple.

12. Commande d'urgence selon la revendication 11, **caractérisée en ce que** la vanne de détection de couple (11) est disposée dans une conduite de service principale (6) et que la vanne de détection de couple (11) présente une limitation de la pression minimale.

13. Commande d'urgence selon la revendication 11 ou 12, **caractérisée en ce que** les actionneurs de mise en pression (36, 37) se trouvent en liaison directe avec la vanne de détection de couple (11) par le biais de conduites de service (8, 9).

14. Commande d'urgence selon l'une des revendications 9 à 13, **caractérisée en ce qu'**il est prévu un élément de commande pour la commande d'embrayage, que l'élément de commande est réalisé sous la forme d'une vanne de commande d'embrayage (38) et que la vanne de commande d'embrayage (38) présente une caractéristique de commande proportionnelle.

15. Commande d'urgence selon l'une des revendications 9 à 14, **caractérisée en ce qu'**il est prévu un élément de commande pour la commande de démultiplication de la paire de pignons menants, que l'élément de commande est réalisé sous la forme d'une vanne de commande de démultiplication côté entraînement (43) et que la vanne de commande de démultiplication côté entraînement (43) présente une caractéristique de commande proportionnelle.

16. Commande d'urgence selon la revendication 14 ou 15, **caractérisée en ce que** la vanne de commande d'embrayage (38) et/ou la vanne de démultiplication côté entraînement (43) présente une limitation de la pression minimale.

17. Commande d'urgence selon l'une des revendications 14 à 16, **caractérisée en ce qu'**il est prévu une vanne de commande commune pour la commande de l'embrayage et pour la commande de la démultiplication de la paire de pignons menants.

18. Commande d'urgence selon l'une des revendications 9 à 17, **caractérisée en ce qu'**il est prévu un élément de commande pour la commande de la démultiplication de la paire de pignons de sortie, que l'élément de commande est réalisé sous la forme d'une vanne de commande de démultiplication côté sortie (46) et que la vanne de commande de démultiplication côté sortie (46) présente une caractéristique de commande inverse.

19. Commande d'urgence selon la revendication 18, **caractérisée en ce que** la vanne de commande de démultiplication côté sortie (46) présente une limitation de la pression maximale.
